# FASCICULE DE BREVET EUROPEEN

(11) **EP 4 159 585 B1**
(45) Date de publication et mention de la délivrance du brevet: **21.05.2025**
(21) Numéro de dépôt: 22193523.2
(22) Date de dépôt: 01.09.2022
(51) Int. Cl.: B62B 3/10, B62B 5/06, F17C 13/08

(54) **CHARIOT HOSPITALIER DE TRANSPORT DE BOUTEILLE DE GAZ, NOTAMMENT DE NO MÉDICAL**
KRANKENHAUSWAGEN ZUM TRANSPORT VON GASFLASCHEN, INSBESONDERE VON MEDIZINISCHEM NO
HOSPITAL TROLLEY FOR TRANSPORTING A GAS CYLINDER, IN PARTICULAR A MEDICAL NO

(30) Priorité: 29.09.2021 FR 2110265
(43) Date de publication de la demande: 05.04.2023
(73) Titulaire: Inosystems, 92160 Antony (FR)
(72) Inventeur: MARCHAL, Frédéric, 92160 Antony (FR); TIRILLY, Nicolas, 92160 Antony (FR)
(74) Mandataire: Air Liquide

(56) Documents cités:
- US-A1- 2009 302 178
- US-A1- 2015 075 525
- US-A1- 2016 310 693

## Description

L'invention concerne un chariot mobile hospitalier permettant le transport simultané d'une ou plusieurs bouteille(s) de gaz sous pression et d'un appareil de fourniture de gaz, notamment de NO médical, afin de pouvoir fournir le gaz à un patient en ayant besoin, en particulier en milieu hospitalier, notamment dans les unités de soins intensifs.

Le monoxyde d'azote ou NO est un médicament gazeux utilisé pour traiter différentes conditions médicales chez un patient, comme l'Hypertension Artérielle Pulmonaire du Nouveau-né ou PPHN (pour *Persistent Pulmonary Hypertension of the Newborn*), le Syndrome de Détresse Respiratoire Aigüe ou SDRA observé principalement chez l'adulte ou encore les hypertensions pulmonaires ou HP en chirurgie cardiaque, comme enseigné notamment par EP-A-560928, EP-A-1516639 ou US-A-10,201,564.

En effet, le NO gazeux, lorsqu'il est inhalé par un patient en ayant besoin, typiquement un patient souffrant de PPHN, SDRA ou HP, dilate ses vaisseaux pulmonaires et augmente ainsi l'oxygénation sanguine en améliorant les échanges gazeux pulmonaires.

Usuellement, le NO gazeux est conditionné en bouteille de gaz sous pression, sous forme diluée dans de l'azote (N₂), c'est-à-dire sous forme de mélanges NO/N₂. Classiquement, la concentration volumique en NO dans un mélange NO/N₂ conditionné en bouteille de gaz sous pression est comprise entre 100 et 10 000 ppmv, en général entre 200 et 1000 ppmv, par exemple de 800 ppmv. (i.e. ppmv = ppm en volume).

Afin de permettre l'administration du NO, le mélange NO/N₂ est additionné à un flux gazeux contenant de l'oxygène (O₂) en une teneur d'au moins 21% en volume environ, typiquement de l'air ou un mélange N₂/O₂, et le flux final ainsi obtenu (i.e. NO/O₂/N₂) est administré par inhalation au patient, via une interface respiratoire, tel un masque respiratoire ou une sonde d'intubation trachéale.

La concentration de NO dans le flux final inhalé par le patient correspond à une posologie qui est déterminée par un médecin ou analogue. En général, la concentration de NO dans le gaz inhalé par le patient est comprise entre 1 et 80 ppm en volume (ppmv), en fonction de la population traitée, i.e. nouveau-nés ou adultes, et aussi de la maladie à traiter.

Le mélange final administré au patient est généralement obtenu au moyen d'un dispositif de délivrance de NO associé à un ventilateur mécanique, comme décrit par US-A-5,558,083. Le dispositif de délivrance de NO injecte la quantité souhaitée de mélange NO/N₂ dans le flux d'air ou de mélange NO/N₂ provenant du ventilateur mécanique, c'est-à-dire un appareil d'assistance respiratoire ou analogue. Le dispositif de délivrance de NO est alimenté en mélange NO/N₂ par la ou les bouteilles de gaz contenant le mélange de N₂/NO.

Généralement, le dispositif de délivrance de NO alimente en mélange NO/N₂, un module d'injection de NO placé dans la branche inspiratoire du circuit patient connecté fluidiquement, d'une part, au ventilateur mécanique et, d'autre part, à l'interface respiratoire (e.g. sonde, masque...) délivrant le mélange gazeux final contenant le NO à la posologie désirée.

En milieu hospitalier, il est nécessaire de pouvoir apporter rapidement auprès du patient non seulement la ou les bouteilles de gaz contenant le mélange de N₂/NO mais aussi le dispositif de délivrance de NO qui est alimenté en NO (i.e. mélange NO/N₂) par cette ou ces bouteilles de gaz.

Actuellement, le déplacement/ transport des bouteilles de gaz et/ou des appareils médicaux au sein des hôpitaux ou analogues se fait soit par portage manuel par le personnel soignant, soit au moyen d'un chariot de transport.

Ainsi, EP2574361 enseigne un chariot médical comprenant une embase montée sur roulettes, surmontée d'une paroi définissant un logement de section en U pour recevoir une bouteille de gaz. Deux bras porteurs relient la paroi du logement en U à un plateau surmontant le chariot. Des instruments médicaux peuvent être installés sur le plateau.

EP1977712 enseigne aussi un chariot mobile se présentant sous forme d'un caisson monté sur roulettes comprenant des compartiments internes. L'un des compartiments loge des bouteilles de gaz et un autre loge une pompe à vide. La paroi supérieure du caisson formant toit forme un plateau servant à recevoir des instruments médicaux ou des appareils. Les bouteilles de gaz et la pompe à vide sont reliées, via des canalisations agencées dans le caisson, des prises de distribution de gaz ou de vide portées par une paroi latérale du caisson.

Toutefois, ces types de chariots ne sont pas conçus pour permettre un transport d'appareils médicaux plus ou moins lourds ou volumineux, dans de bonnes conditions de sécurité, c'est-à-dire sans risque de chute depuis leur plateau.

Par ailleurs, EP3854368 et EP3854660 décrivent un chariot mobile se présentant sous forme d'un caisson monté sur roulettes comprenant des compartiments internes. La paroi supérieure du caisson formant toit comprend une ouverture communiquant avec l'un des compartiments internes afin de permettre d'y insérer un tuyau souple de distribution de gaz raccordé à un arbre de distribution de gaz surmontant le chariot et alimenté en gaz par une bouteille de gaz agencée dans le caisson. Cependant, ce chariot ne permet pas le transport d'appareillages.

D'autres chariots pour bouteille(s) de gaz plus rudimentaires sont enseignés par FR2926728 et FR2910362.

On comprend que ces chariots ne sont pas adaptés et/ou peu pratiques pour une mise en œuvre d'un traitement par administration par inhalation de NO gazeux, lequel requiert notamment un déplacement ou transport d'une ou plusieurs bouteille(s) de gaz sous pression, telles une ou des bouteilles de NO (i.e. mélange NO/N₂), et d'un appareil de fourniture de gaz, en particulier un dispositif de délivrance de NO, au sein d'un bâtiment hospitalier ou analogue.

On connait aussi US2016/0310693 qui enseigne un chariot mobile comprenant une embase avec des emplacements de stockage pour loger des bouteilles de gaz, notamment de NO, et des roulettes. Une colonne unique se projette vers le haut depuis l'embase et surmontée par une structure-plateau sur laquelle est agencé un mât portant un appareil de délivrance de gaz. Ce chariot n'est toutefois pas satisfaisant. Ainsi, il n'est pas adapté au stockage et au transport simultané d'accessoires, manuels ou autres éléments nécessaires au traitement du patient. De plus, étant donné que la colonne unique doit à la fois maintenir les bouteilles de gaz et porter la structure-plateau, le mât et l'appareil de délivrance de gaz, c'est-à-dire supporter un poids de plusieurs kg, typiquement au moins 5 à 10 kg, elle doit nécessairement être robuste et avoir donc des dimensions importantes, ce qui augmente le poids et l'encombrement global du chariot, éloigne les bouteilles l'une de l'autre en augmentant alors obligatoirement la taille de l'embase, et complique les manipulations du chariot par le personnel soignant. Enfin, le fait que la colonne soit excentrée et supporte tout le poids de la structure-plateau, du mât et de l'appareil de délivrance du NO, il existe des risques sécuritaires du fait du porte-à-faux existant, notamment un risque de rupture de la structure-plateau si un utilisateur venait à s'appuyer sur la structure-plateau en augmentant alors le poids devant être supporté par la colonne unique.

Par ailleurs, US2009/0302178 propose une structure de chariot plus rudimentaire qui comprend une embase, une colonne unique se projetant vers le haut depuis l'embase et surmontée par une structure-plateau. Des caissons de rangement sont agencés entre l'embase et la structure d'ancrage. Toutefois, ce chariot ne permet pas de transporter des bouteilles de gaz et n'est donc pas adapté au traitement par mise en œuvre de gaz conditionné en bouteilles.

Il existe dès lors un besoin pour un chariot médical mobile amélioré permettant de transporter simultanément une ou de préférence plusieurs bouteille(s) de gaz sous pression, notamment des bouteilles de NO (i.e. mélange NO/N₂), et d'un appareil de fourniture de gaz, en particulier un dispositif de délivrance de NO, ainsi que des accessoires, des manuels techniques ou d'utilisation, des dispositifs servant aux soins des patients (e.g. ballon d'insufflation ou BAVU, flexible, capteur, kit utilisateur....) ou autres, afin de pouvoir fournir le gaz (i.e. le NO) à un patient en ayant besoin dans le cadre d'un traitement par NO inhalé, notamment dans les unités de soins intensifs.

Autrement dit, le problème est de proposer un chariot médical mobile amélioré, notamment en termes d'ergonomie et de sécurité, qui soit mieux adapté aux traitements par gaz, notamment par NO inhalé dans ou vers les unités de soins intensifs.

Selon l'invention, il est proposé un chariot mobile, i.e. une unité de transport conçue pour rouler sur le sol lors de ses déplacements, comprenant :
- une embase ou châssis comprenant au moins un emplacement de stockage pour loger au moins une bouteille de gaz,
- plusieurs roulettes servant à déplacer le chariot sur le sol,
- une colonne principale se projetant vers le haut depuis l'embase,
- un caisson de rangement,
- une colonne secondaire se projetant vers le haut depuis l'embase et est solidarisée à la structure d'ancrage,
- une structure d'ancrage agencée au niveau d'une extrémité supérieure de la colonne principale, aussi appelée structure-plateau,
- un mât-support porté par la structure d'ancrage et se projetant vers le haut, ledit mât-support portant des moyens de fixation configurés pour y fixer un appareil de délivrance de gaz, et
- au moins une poignée de préhension manuelle permettant à un utilisateur de manipuler le chariot, en particulier de le diriger, de le tirer ou le pousser, lors de déplacements sur le sol.

Selon l'invention le chariot comprend préférentiellement aussi les caractéristiques suivantes :
- le caisson de rangement est agencé le long de la colonne principale, et
- la colonne secondaire et la colonne principale sont agencées espacées l'une à l'autre,
et dans lequel le caisson :
- a une forme aplatie comprenant une largeur (L) et une épaisseur (E) telle que : L ≥ 2.E, c'est-à-dire que sa largeur L est égale à au moins 2 fois son épaisseur (E),
- est fixé à la colonne principale, et
- s'étend sensiblement entre l'embase et la structure d'ancrage.

Selon le mode de réalisation considéré, le chariot de l'invention peut comprendre l'une ou plusieurs des caractéristiques suivantes :
- la poignée de préhension manuelle est fixée à la structure d'ancrage.
- la poignée de préhension manuelle comprend une structure annulaire, de préférence une structure annulaire ouverte.
- la poignée de préhension manuelle est dimensionnée pour être saisie manuellement par un utilisateur.
- la poignée de préhension manuelle a une forme longiligne, préférentiellement tubulaire, et un diamètre compris entre 2 et 6 cm.
- le caisson est plat, de préférence sa largeur L est égale à au moins 3 fois son épaisseur E (L ≥ 3.E), en particulier au moins 4 fois son épaisseur E (L ≥ 4.E).
- le caisson a une forme générale parallélépipédique (approximativement) rectangle.
- le caisson définit un volume intérieur.
- le caisson comprenant une paroi ou face avant et des rebords latéraux agencés à la périphérie de la paroi avant et se projetant vers la colonne principale, c'est-à-dire que qu'il ne comporte pas de paroi arrière.
- selon un autre mode de réalisation, le caisson comprenant une paroi ou face avant et une paroi ou face arrière définissant entre elles un espace intérieur, lesdites parois avant et arrière étant reliées l'une à l'autre par des rebords latéraux agencés à la périphérie desdites parois avant et arrière.
- la structure d'ancrage comprend un plateau ou toit surmontant la colonne principale, par exemple une plaque ou analogue.
- la structure d'ancrage a une forme générale sensiblement triangulaire ou une autre forme.
- la structure d'ancrage a une forme annulaire ouverte venant se solidariser à la poignée de préhension manuelle, via un ou des bras de jonction.
- la structure d'ancrage a une forme générale sensiblement triangulaire et comprend des bras de jonction prolongeant ses sommets et venant se solidariser à la poignée de préhension manuelle.
- la colonne principale se projetant vers le haut depuis l'embase est fixée à ladite embase.
- la colonne secondaire se projetant vers le haut depuis l'embase est fixée à ladite embase.
- la colonne principale s'étend entre l'embase et la structure d'ancrage.
- la colonne secondaire s'étend entre l'embase et la structure d'ancrage.
- la colonne secondaire et la colonne principale sont agencées sensiblement parallèles l'une à l'autre, c'est-à-dire parallèles ou approximativement parallèles.
- la colonne secondaire est plus fine que la colonne principale, en particulier son aire de section est inférieure à celle de la colonne principale.
- la colonne principale et la colonne secondaire ont des sections circulaires, rectangulaires ou carrées, ou autre.
- la colonne principale et la colonne secondaire sont des profilés de section circulaire, rectangulaire ou carrée, ou autre.
- la colonne secondaire a une section de l'ordre de 3 à 8 cm, typiquement de 3 à 6 cm, par exemple une section carrée de 4 x 4 cm.
- la colonne principale a une section de l'ordre de 3 à 25 cm, par exemple une section rectangulaire de 4 x 16 cm.
- la colonne principale et la colonne secondaire sont des profilés longilignes.
- la colonne principale et la colonne secondaire sont des profilés en alliage d'aluminium. Toutefois, un autre matériau pourrait éventuellement convenir.
- les moyens de fixation portés par le mât-support comprennent une platine perforée permettant une fixation par vissage de l'appareil de délivrance de gaz.
- le mât-support comprend des moyens de réglage en hauteur, c'est-à-dire axialement, et de blocage en position désirée de la platine perforée de manière à pouvoir ajuster sa hauteur, donc celle de l'appareil de délivrance de gaz qu'elle porte, pendant une utilisation, par exemple pour adapter la hauteur de la platine et/ou de l'appareil de délivrance de gaz à la taille de l'utilisateur.
- il comprend au moins une bouteille de gaz logée dans ledit au moins un emplacement de l'embase, de préférence une bouteille de gaz contenant un mélange NO/N₂.
- il comprend deux bouteilles de mélange NO/N₂ logées dans deux emplacements de l'embase.
- la colonne secondaire est agencée, i.e. située, entre les deux bouteilles de mélange NO/N₂.
- chaque bouteille de mélange NO/N₂ est fixée, directement ou indirectement, à la colonne principale et/ou à la colonne secondaire, c'est-à-dire à l'une, à l'autre ou aux deux colonnes, de préférence aux deux colonnes.
- il comprend en outre une bouteille d'oxygène (O₂) dans un emplacement additionnel de l'embase.
- la bouteille d'oxygène (O₂) est fixée, directement ou indirectement, à la colonne secondaire.
- la colonne secondaire est logée dans un espacement défini entre les deux bouteilles de mélange NO/N₂ et la bouteille d'oxygène (O₂).
- il comprend un appareil de délivrance de gaz fixé aux moyens de fixation du mât-support, en particulier un appareil de délivrance un mélange NO/N₂.
- il comprend au moins 3 roulettes, de préférence au moins 4 roulettes, par exemple 4 roulettes ou 8 roulettes agencées par paires.
- les roulettes sont fixées à des expansions solidaires de l'embase et se projetant en éloignement par rapport à l'embase.
- les expansions forment des jambes.
- chaque expansion comprend au moins une roulette ou une paire de roulettes.
- les roulettes ou paires de roulettes sont agencées sur des pieds fixées aux expansions formant les jambes.
- les pieds fixées sont montés pivotants sur les expansions.
- les expansions et l'embase sont formées d'une seule pièce, préférentiellement en métal ou alliage métallique, tel un alliage d'aluminium ou autre. Selon un autre mode de réalisation, elles peuvent être faites par moulage injection de matière plastique (i.e. polymère). Bien entendu, les expansions peuvent aussi être indépendantes et fixées à l'embase, par exemple par vissage ou autre.
- les ou des pieds comprennent un dispositif de blocage, tel un frein ou analogue, permettant de bloquer les (paires de) roulettes afin d'empêcher leur rotation de manière à immobiliser le chariot et donc à éviter tout déplacement involontaire ou intempestif dudit chariot sur le sol.
- les ou des pieds comprennent une pédale de commande, actionnable par l'utilisateur, coopérant avec le dispositif de blocage de manière à l'activer ou à le désactiver lorsqu'un utilisateur actionne ladite pédale de commande.
- le chariot comprend un axe vertical (AA), lorsqu'il est en position débout sur le sol.
- le mât-support est agencé ou orienté (sensiblement) selon l'axe vertical (AA).
- le mât-support est tubulaire, notamment cylindrique.
- les moyens de fixation comprend une platine de fixation perforée, par exemple de type VESA, permettant la fixation d'un appareil par vissage.
- le mât-support est situé en partie haute du chariot au-dessus du caisson.
- le caisson se projette selon l'axe vertical (AA) le long de la colonne principale.
- le caisson est fixé à la colonne principale par vissage ou autre.
- le caisson est en polymère.
- le caisson comprend un ou plusieurs compartiments de rangement internes accessibles depuis l'extérieur, via une ou des ouvertures aménagées dans la face avant du caisson et munies de portes.
- chaque porte est montée pivotante, de préférence selon un axe horizontal (BB).
- le caisson a une hauteur (H) comprise environ entre 60 et 110 cm, une largeur (L) comprise entre 15 et 60 cm, et une épaisseur (E) comprise entre 5 et 18 cm.
- la (ou les) bouteille de gaz contient un mélange gazeux NO/N₂ contenant de 100 à 10 000 ppmv de NO et de l'azote pour le reste, de préférence de 100 à 2000 ppmv de NO.
- la (ou les) bouteille de gaz, i.e. chaque bouteille de mélange NO/N₂, contient un mélange gazeux NO/N₂ contenant de 100 à 1000 ppmv de NO et de l'azote pour le reste, de préférence de 200 à 1000 ppmv de NO.
- la (ou les) bouteille de gaz contient du gaz à une pression comprise entre 5 bar et au moins 200 bar abs.
- la (ou les) bouteille de gaz est équipée d'un robinet de distribution de gaz, en particulier un robinet à détendeur intégré (RDI).
- la (ou les) bouteille de gaz est équipée d'un capotage de protection protégeant le robinet de distribution de gaz.
- la (ou les) bouteille de gaz ont une forme d'ogive, i.e. un corps cylindrique surmonté d'une portion resserrée formant goulot avec orifice d'entrée/sortie de gaz communiquant avec le volume de stockage interne de la bouteille de gaz.
- la (ou les) bouteille de gaz est fixée -directement ou indirectement- au chariot, typiquement à la colonne principale et/ou à la colonne secondaire, de préférence par des moyens de liaison, par exemple une ou des sangles munies de connecteurs ou analogue.
- le chariot mobile est conçu pour être roulé sur le sol lorsqu'il est manipulé et déplacé, typiquement poussé ou tiré, par un utilisateur, en particulier un personnel soignant, par exemple un médecin, une infirmière ou analogue, au sein d'un bâtiment hospitalier ou analogue.
- l'embase du chariot est située en partie basse du chariot, c'est-à-dire à sa base qui est située à proximité immédiate du sol.
- l'embase du chariot comprend une plateforme où sont aménagés les emplacements de stockage.
- les emplacements de stockage sont dimensionnés pour recevoir chacun une bouteille de gaz en position debout.
- les emplacements de stockage ont une forme de disque ou analogue.
- le chariot comprend trois emplacements de stockage agencés en triangle.
- selon un mode de réalisation, le mât-support vient se loger dans une structure tubulaire formant manchon portée par la structure d'ancrage. Le mât-support est monté coulissant dans la structure tubulaire formant manchon de manière à permettre un réglage de hauteur.
- selon un autre mode de réalisation, le mât-support est monté sur la structure d'ancrage de manière à être fixé axialement mais mobile en rotation autour de l'axe vertical (AA).
- le mât-support est monté dans sa région centrale de la structure d'ancrage.
- l'embase comprend en outre un repose-pied permettant à l'utilisateur de faciliter le départ du chariot lorsqu'il est arrêté sur le sol, en y exerçant une force de poussée avec son pied.
- le chariot comprend un côté avant et un côté arrière. Le côté arrière est celui situé face à l'utilisateur lorsque ce dernier pousse le chariot pour le déplacer par roulage sur le sol.
- le repose-pied est situé du côté arrière du chariot.
- les bouteilles de gaz sont situées du côté avant du chariot.
- le caisson est situé du côté arrière du chariot.
- les robinets de distribution de gaz des bouteilles de gaz sont reliés fluidiquement à l'appareil de délivrance de gaz par des tuyaux flexibles de manière à alimenter l'appareil de délivrance de gaz en mélange NO/N₂ et en oxygène.

L'invention concerne aussi l'utilisation d'un chariot mobile selon l'invention pour transporter une ou plusieurs bouteille(s) de gaz sous pression, tel un mélange NO/N₂ et/ou de l'oxygène, et un appareil de fourniture de gaz, typiquement du NO destiné à être administré à un patient adulte, enfant ou nouveau-né souffrant de PPHN, SDRA, HP ou d'une autre pathologie, via un circuit respiratoire alimenté en un gaz contenant au moins 21% vol, d'oxygène, tel de l'air ou un mélange N₂/O₂, provenant d'un ventilateur médical.

L'invention va maintenant être mieux comprise grâce à la description détaillée suivante, faite à titre illustratif mais non limitatif, en référence aux figures annexées parmi lesquelles :
Fig. 1 schématise un mode de réalisation d'un chariot mobile selon l'invention non-équipé, selon une vue de ¾ arrière,
Fig. 2 représente le chariot de la Fig. 1 vu de côté,
Fig. 3 représente le chariot de la Fig. 1 vu de dessus,
Fig. 4 représente le chariot de la Fig. 1, selon une vue de ¾ avant,
Fig. 5 représente le chariot de la Fig. 1, vu de face,
Fig. 6 représente le chariot de la Fig. 1, selon une vue de ¾ avant, équipé de bouteilles de gaz et d'un appareil de délivrance de gaz, et
Fig. 7 représente le chariot de la Fig. 6, selon une vue de ¾ arrière.

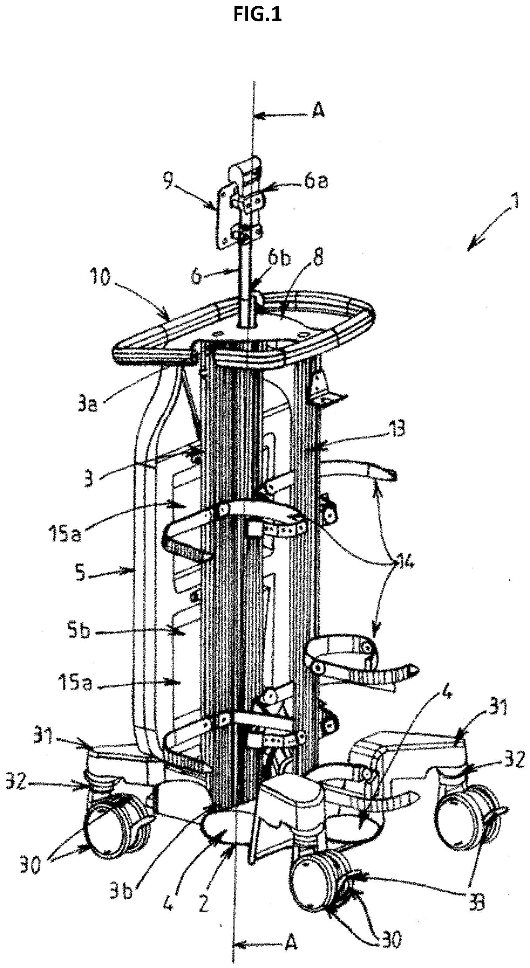

Fig. 1 à Fig. 7 schématisent un mode de réalisation d'un chariot mobile 1 selon l'invention, destiné au milieu hospitalier ou analogue, lequel est conçu pour être déplacé facilement sur le sol lorsqu'il est manipulé, typiquement poussé ou tiré, par un personnel soignant, par exemple un médecin, une infirmière ou analogue, au sein d'un bâtiment hospitalier ou analogue.

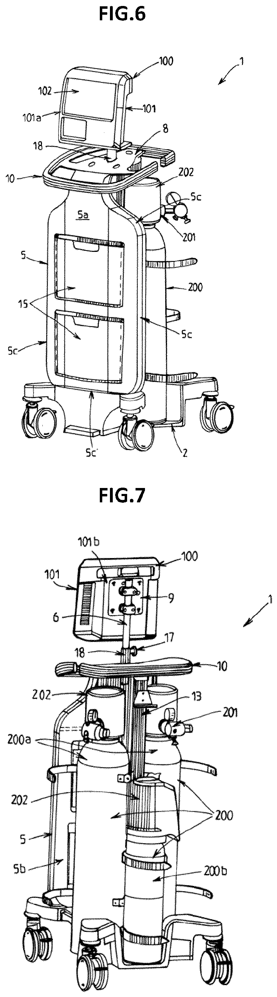

Sur les Fig. 1 à Fig. 5, le chariot 1 n'est nu, c'est-à-dire non-équipé, alors que sur Fig. 6 et Fig. 7, il est équipé de ses équipements, à savoir ici 3 bouteilles de gaz 200 et un appareil de délivrance de gaz 100, comme expliqué ci-après.

Le chariot mobile 1 de l'invention comprend, en partie inférieure, une embase 2 ou châssis comprenant plusieurs roulettes 30, à savoir ici des paires de roulettes 30, servant à déplacer par roulage du chariot 1 sur le sol. Les (paires de) roulettes 30, i.e. des petites roues, sont agencées sur des pieds 32 fixés de manière pivotante, à des expansions 31 de l'embase 2 ou jambes.

Avantageusement, les expansions 31 ou jambes sont formées d'une seule pièce avec le reste de l'embase 2, par exemple par moulage injection ou autre. L'embase 2, y compris les expansions 31, peut être formée de polymère.

De préférence, les pieds 32 comprennent un dispositif de blocage, tel un frein ou analogue, permettant de bloquer les roulettes 30 afin d'empêcher leur rotation, ce qui permet d'immobiliser le chariot sur le sol et donc d'éviter tout déplacement involontaire ou intempestif de celui-ci. L'activation ou, à l'inverse, la désactivation du dispositif de blocage des roulettes 30 se fait au moyen d'une pédale de commande 33 actionnable par l'utilisateur, notamment lorsqu'il appuie dessus avec son pied.

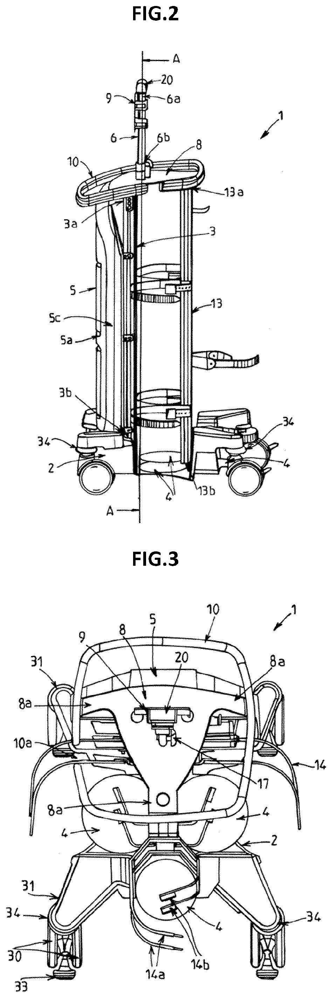

Comme illustré en Fig. 2 à Fig. 4, les pieds 32 portent aussi des dispositifs amortisseurs de chocs 34, agencés entre les pieds 32 et les expansions 31 servant à absorber les chocs susceptibles de se produire pendant les déplacements du chariot 1, lorsque celui-ci entre en collision avec d'autres objets comme un autre chariot, un lit, un meuble, une porte etc...

Par ailleurs, le chariot 1 comprend un côté avant et un côté arrière, le côté arrière étant celui situé face à l'utilisateur lorsque ce dernier pousse le chariot 1 pour le déplacer par roulage sur le sol. Ainsi, le côté avant du chariot 1 est celui situé à droite sur Fig. 2, alors que le côté arrière est celui situé à droite sur Fig. 2.

Par ailleurs, l'embase 2 comprend aussi plusieurs emplacements de stockage 4 servant à loger des récipients de gaz sous pression, à savoir ici trois bouteilles de gaz 200 comprenant deux bouteilles 200a contenant un mélange NO/N₂, par exemple un mélange NO/N₂ contenant de 100 à 1000 ppmv de NO et de l'azote pour le reste, et une bouteille 200b contenant de l'oxygène, comme illustré en Fig. 7.

Les emplacements de stockage 4 pour les bouteilles de gaz 200 ; 200a, 200b sont prévus du côté avant du chariot 1.

Les bouteilles de gaz 200 ont un corps cylindrique et généralement une forme d'ogive. Elles sont par exemple en alliage d'aluminium, en matériaux composite ou en acier. Chaque bouteille 200 est équipée d'un robinet de distribution de gaz 201 (partiellement visible), par exemple un RDI, agencé au niveau de son col comprenant l'orifice communiquant fluidiquement avec le volume interne de la bouteille, et préférentiellement d'un capotage de protection 202 servant à protéger le robinet de distribution de gaz 201 contre les chocs notamment. Les robinets de distribution de gaz 201 des bouteilles de gaz 200 ; 200a, 200b sont reliés fluidiquement à l'appareil de délivrance de gaz 100 par des tuyaux flexibles de manière à alimenter l'appareil de délivrance de gaz 100 en mélange NO/N₂ et en oxygène.

Les emplacements de stockage 4 sont formés dans l'embase 2. Ils comprennent chacun une petite plateforme, de préférence en forme de disque, bien visibles sur Fig. 3, sur laquelle repose chaque bouteille de gaz 200, en position debout. De préférence, les emplacements de stockage 4 sont en position rabaissée, c'est-à-dire à proximité immédiate du sol, afin de faciliter les changements de bouteilles 200, i.e. chargements/déchargements, en évitant à l'utilisateur à avoir à soulever beaucoup les bouteilles 200, notamment lorsqu'elles sont pleines et lourdes, afin de les positionner sur lesdits emplacements de stockage 4.

Avantageusement, les emplacements de stockage 4 ne comprennent pas de rebord extérieur afin, là encore, de faciliter les opérations de changement de bouteilles.

Les bouteilles de gaz 200 sont maintenues en place sur le chariot 1 au moyen de dispositifs d'attache 14, ici des sangles 14a munies de connecteurs 14b, comme expliqué ci-après ; toutefois, d'autres dispositifs d'attache peuvent convenir. Attacher les bouteilles de gaz 200 permet d'éviter leur chute, notamment pendant les déplacements du chariot 1.

Le chariot 1 comprend en outre une colonne principale 3 se projetant vers le haut depuis l'embase 2, c'est-à-dire verticalement selon l'axe vertical (AA) du chariot 1. La colonne principale 3 est solidarisée à l'embase 2 au niveau de son extrémité inférieure 3b, par exemple elle y est fixée par vissage ou analogue.

Une structure d'ancrage 8, aussi appelée structure-plateau, est agencée au niveau de l'extrémité supérieure 3a libre de la colonne principale 3. Ici, la structure d'ancrage 8 forme un plateau ou un toit horizontal surmontant la colonne principale 3 et une colonne secondaire, comme expliqué ci-après. Par exemple, la structure d'ancrage 8 est une plaque ou analogue, ici de forme générale triangulaire (cf. Fig. 3) comprenant des bras de jonction 8a à ses trois sommets qui viennent se raccorder à une poignée de préhension manuelle 10, comme détaillé ci-après ; bien entendu, une autre forme pourrait convenir.

Un caisson de rangement 5 est agencé le long de la colonne principale 3. Il y est fixé par vissage par exemple. Le caisson de rangement 5 s'étend entre l'embase 2 et la structure d'ancrage 8. Autrement dit, le caisson 5 se projette vers le haut depuis l'embase 2 selon l'axe vertical (AA) du chariot 1.

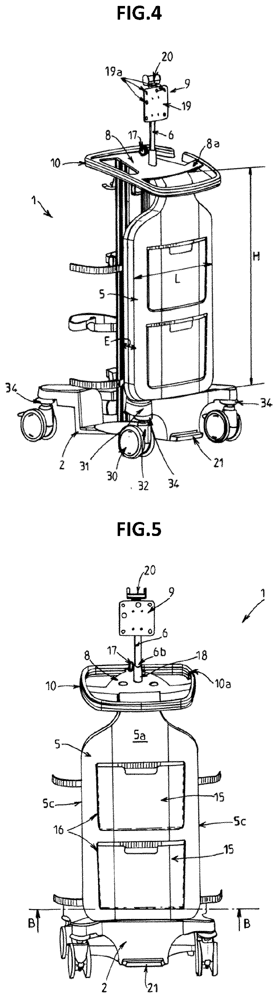

Le caisson 5 a avantageusement une forme aplatie pour limiter l'encombrement de l'ensemble. Par exemple, comme illustré en Fig. 4, il peut avoir une hauteur (H) comprise entre 60 cm et 110 cm, une largeur (L) comprise entre 15 cm et 60 cm, et une épaisseur (E) comprise entre 5 cm et 18 cm. Dans tous les cas, sa largeur (L) est égale à au moins 2 fois son épaisseur (E), i.e. L ≥ 2.E.

En outre, le caisson 5 peut être formé de polymère ou d'un autre matériau, par exemple de matériau composite.

Ici, le caisson 5 comprend une paroi principale 5a, aussi appelée face avant 5a, bordée, sur sa périphérie, de parois latérales 5c se projetant en direction de la colonne principale 3 de manière à délimiter un espacement ou volume interne qui est, dans le mode de réalisation proposé, ouvert vers l'arrière 5b, c'est-à-dire du côté de la colonne principale 3 et des bouteilles 200. Sur Fig. 1, on distingue les compartiments de rangement internes 15a au travers de la ou des ouvertures arrières.

Selon un autre mode de réalisation (non montré), le caisson 5 peut comprendre outre la face ou paroi avant 5a, une paroi arrière additionnelle venant obturer la ou des ouvertures arrières de manière à fermer le caisson 5. Dans ce cas, la face ou paroi avant 5a et la paroi arrière additionnelle se font face et sont reliées l'une à l'autre par les bordures périphériques 5c en étant espacées l'une de l'autre de manière à délimiter entre elles l'espacement interne comprenant les compartiments de rangement internes 15a. La face arrière 5b se trouve alors face à la colonne principale 3 et y est préférentiellement fixée, c'est-à-dire aussi du côté des bouteilles 200.

Comme illustré en Fig. 5, la face avant 5a du caisson 5 comprend ici deux portes 15, par exemple pivotantes ou basculantes, par exemple autour de charnières situées en bas des portes 15 et d'axes horizontaux (BB) perpendiculaires à l'axe vertical (AA). Bien entendu, le caisson 5 pourrait comprendre plus ou moins de portes 15. Les portes 15 s'ouvrent donc du côté de la face avant 5a du caisson 5, c'est-à-dire du côté arrière du chariot 1.

Les portes 15 ferment des ouvertures 16 (non visibles) aménagées dans la face avant 5a du caisson 5 et donnant accès aux compartiments de rangement internes 15a servant à stocker du matériel médical, tels des accessoires ou autres, par exemple kits d'administration de gaz, masque respiratoire, sonde trachéale, tuyaux, notice d'utilisation, connecteurs etc... Ces ensembles forment des bacs de rangement encastrés.

Par ailleurs, le chariot 1 comprend aussi un mât-support 6 porté par la structure d'ancrage 8, en particulier fixé à la structure d'ancrage 8 dans la région de son extrémité distale 6b. Le mât-support 6 se projette vers le haut, c'est-à-dire selon l'axe vertical (AA). Il a ici une forme cylindrique et l'extrémité distale 6b du mât-support 6 traverse la structure d'ancrage 8.

Selon un mode de réalisation, comme visible sur Fig. 5 à Fig. 7, l'extrémité distale 6b du mât-support 6 vient se loger dans une structure tubulaire 18 formant manchon portée par la structure d'ancrage 8, de préférence dans sa région centrale. Ainsi, le mât-support 6 peut coulisser dans la structure tubulaire formant manchon 18 de manière à permettre un réglage ou ajustage en hauteur dudit mât-support 6 afin de pouvoir être plus ou moins déplié ou sorti selon l'axe vertical AA, c'est-à-dire qu'il est télescopique. De préférence, un dispositif de verrouillage peut être prévu pour maintenir le mât-support 6 en position désirée le long du mât 6, tel un organe rotatif, de type bouton rotatif 17, actionnable par l'utilisateur, agencé au niveau de structure formant manchon 18.

Selon un autre mode de réalisation, le mât-support 6 est fixé à la structure d'ancrage 8, de préférence dans sa région centrale, de manière à être mobile uniquement en rotation autour de son axe (AA), c'est-à-dire qu'il ne peut pas translater axialement selon l'axe (AA) mais est mobile uniquement autour dudit axe (AA). De préférence, là encore, un dispositif de verrouillage peut être prévu pour maintenir le mât-support 6 en position désirée autour du mât 6.

Selon encore un autre mode de réalisation, le mât-support 6 est fixé de manière non-mobile à la structure d'ancrage 8, par exemple par vissage, soudage ou analogue.

De plus, le mât-support 6 peut comprendre des moyens de réglage de hauteur (selon l'axe (AA), et/ou d'angle et/ou d'orientation d'une platine-support 19 portant un appareil de délivrance de gaz, comme expliqué ci-après, et des moyens de blocage en position désirée, c'est-à-dire à la hauteur et/ou à l'angle et/ou dans l'orientation désirés, tel un organe rotatif, de type bouton rotatif, actionnable par l'utilisateur, coopérant avec le mât 6, et de préférence associé à une goupille de verrouillage permettant de sécuriser le maintien en position. Bien entendu, d'autres systèmes de réglage/blocage sont utilisables.

Pouvoir opérer un réglage de hauteur de la platine-support 19 le long du mât-support 6, c'est-à-dire selon l'axe (AA), est avantageux car cela permet de pouvoir rendre plus facile pour l'utilisateur, la lecture de l'écran 102 situé sur la face avant 101a de l'appareil de délivrance de gaz 100 porté par la platine-support 19, comme illustré en Fig. 6. En effet, le mât-support 6, en particulier la platine-support 19, est destiné à recevoir et à porter un appareil de délivrance de gaz 100, en particulier de délivrance d'un mélange NO/N₂. Pour ce faire, afin de permettre d'y fixer l'appareil de délivrance de gaz 100, comme illustré en Fig. 6 et Fig. 7, des moyens de fixation 9 d'appareil, à savoir ici une platine-support 19, sont prévus sur le mât-support 6, de préférence dans la région de son extrémité libre 6a.

L'appareil de délivrance de gaz 100 est destiné à être raccordé fluidiquement au circuit patient reliant fluidiquement un ventilateur médical à une interface respiratoire, tel un masque ou une sonde trachéale, délivrant le gaz, par exemple un mélange gazeux à base de NO, d'oxygène et d'azote, aux voies aériennes du patient à traiter. L'appareil de délivrance de gaz 100 est alimenté en gaz, notamment en NO/N₂, par une (ou des) bouteille de gaz 200 via un (ou des) tuyau flexible d'acheminement de gaz venant se raccorder au raccord de sortie du (ou des) robinets de distribution de gaz 201.

Avantageusement, comme déjà dit, les moyens de fixation 9 comprennent une platine-support 19 comprenant des orifices ou perforations 19a pour fixation par vissage, par exemple de type VESA (*Video Standards Electronics Association* ou association des normes électroniques vidéo). Par exemple, la platine-support 19 a une forme rectangulaire et comprend plusieurs perforations traversantes 19a destinées à recevoir des vis de fixation venant se visser dans des orifices de vissage prévus sur l'appareil 100, par exemple aménagés dans la face arrière 101b de la carcasse 101 de l'appareil 100, comme illustré en Fig. 7.

Le mât-support 6 peut aussi comprendre dans la région son extrémité libre 6a, des moyens d'accrochage 20, c'est-à-dire de fixation, telle une zone tubulaire ou analogue, comme illustré en Fig. 4 et Fig. 5, destinés à coopérer avec un système d'arrimage, i.e. d'accrochage, prévu sur certains appareils 100, servant à et/ou permettant de les accrocher, par exemple de les suspendre, sur des structures tubulaires de type barreau de lit ou analogue.

Par ailleurs, afin de permettre à un utilisateur, tel un personnel soignant, de diriger facilement le chariot 1 lors de ses déplacements sur le sol d'un bâtiment hospitalier par exemple, il est prévu une poignée de préhension manuelle 10 que l'utilisateur peut saisir avec ses mains pour ensuite manipuler le chariot 1, typiquement le pousser ou le tirer.

Ici, la poignée de préhension manuelle 10 est solidarisée à la structure d'ancrage 8, via les bras de jonction 8a. Elle a une forme générale annulaire. Elle est agencée autour du mât-support 6 et de la structure d'ancrage 8. La poignée de préhension 10 comprend une (ou des) ouverture 10a permettant le passage de câbles et/ou de tuyaux flexibles ou analogues afin de les rassembler en faisceau dans l'espace intérieur de l'anneau formé par la poignée de préhension manuelle 10.

Autrement dit, la poignée de préhension 10 a une forme d'anneau ouvert qui est dimensionné pour permettre sa saisie manuelle par l'utilisateur, par exemple son diamètre est de l'ordre d'environ 2 à 5 cm. Comme on le voit, la poignée 10 a une forme globalement annulaire, i.e. une forme d'anneau ouvert, et est agencée tout autour de la structure d'ancrage 8, ce qui est avantageux car cette configuration permet à un utilisateur de saisir le chariot 1 de tous les côtés, c'est-à-dire indifféremment par rapport à sa position par rapport au chariot 1, par exemple pour le réorienter ou le repositionner dans une salle d'opérations ou de soins par exemple d'un hôpital ou analogue.

Comme déjà évoqué, afin de renforcer la structure, le chariot 1 comprend par ailleurs une colonne secondaire 13 se projetant elle aussi vers le haut depuis l'embase 2, c'est-à-dire selon l'axe vertical (AA), et solidarisée à l'embase 2 au niveau de son extrémité inférieure 13b, par exemple par vissage ou analogue. Là encore, la colonne secondaire 13 vient de solidariser à la structure d'ancrage 8, c'est-à-dire la structure plateau, à son extrémité supérieure 13a.

Autrement dit, la colonne principale 3 et la colonne secondaire 13 sont agencées (approximativement) parallèles et décalées l'une à l'autre, i.e. espacées, et fixées, d'une part à l'embase 2 et, d'autre part, à la structure d'ancrage 8, par exemple par vissage au travers de la plaque formant la structure d'ancrage 8.

De préférence, la distance entre la colonne principale 3 et la colonne secondaire 13 est de plusieurs centimètres, typiquement comprise entre environ 10 et 30 cm, typiquement entre environ 15 et 25 cm.

La colonne principale 3 et la colonne secondaire 13 ont une forme allongée, typiquement une structure tubulaire de section carré, rectangulaire, circulaire ou autre. Elles ont une longueur de l'ordre de 50 à 120 cm environ. Elles sont formées d'un (ou plusieurs) matériau résistant, par exemple en polymère ou en métal.

De préférence, la colonne secondaire 13 est plus fine que la colonne principale 3, par exemple la colonne secondaire 13 a une section carrée de l'ordre de 4 x 4 cm, alors que la colonne principale 3 a une section rectangulaire de l'ordre de 4 x 16 cm.

Utiliser deux colonnes parallèles 3, 13 pour soutenir la structure d'ancrage 8 est avantageux par rapport à une seule colonne selon l'art antérieur car cela permet d'augmenter la solidité et robustesse de l'ensemble, en répartissant entre ces colonnes 3, 13, le poids qui s'y exerce, i.e. poids du mât 6, de la structure d'ancrage 8, de la platine 19, de la poignée de préhension 10 et de l'appareil 100.

Autrement dit, utiliser deux colonnes 3, 13 parallèles permet de déporter, i.e. centrer, la masse (i.e. poids) du mât 6, de la structure d'ancrage 8, de la platine 19, de la poignée de préhension 10 et de l'appareil 100 vers le centre du chariot 1, ce qui permet d'éliminer tout porte-à-faux pouvant exister avec les chariots à colonne unique de l'art antérieur.

De plus, utiliser deux colonnes 3, 13 permet aussi de rapprocher davantage les deux bouteilles 200a l'une de l'autre et ainsi de réduire les dimensions de l'embase 2 en réduisant son empreinte au sol, donc aussi l'encombrement général et le poids total du chariot 1.

Avantageusement, des dispositifs d'attache 14, telles des sangles 14a avec connecteurs 14b ou tout autre dispositif de fixation adapté, sont portés par la colonne principale 3 et la colonne secondaire 13. De préférence, leur positionnement vertical sur les colonnes 3, 13 peut être ajusté axialement afin de pouvoir fixer fermement et efficacement des bouteilles 200 de tailles différentes.

Afin de garantir une bonne sécurité d'utilisation, les bouteilles 200a de NO/N₂ sont fixées par des dispositifs d'attache 14 à la colonne principale 3 et/ou à la colonne secondaire 13, de préférence aux deux colonnes 3, 13. Par ailleurs, il est suffisant de fixer la bouteille d'oxygène 220b uniquement à la colonne secondaire 13.

En outre, on voit par ailleurs sur Fig. 4, que l'embase 2 comporte aussi un dispositif de type repose-pied 21 servant à l'utilisateur à faire démarrer, c'est-à-dire faciliter le départ du chariot 1 lorsqu'il est arrêté sur le sol, en y exerçant une force de poussée avec son pied. Le repose-pied 21 est situé du côté arrière du chariot 1, c'est-à-dire à l'opposé des bouteilles de gaz.

Le chariot 1 peut comprendre aussi un système de vidange des tuyaux, tel un téton cylindrique sur lequel l'utilisateur vient presser l'extrémité libre du tuyau de gaz flexible afin d'activer la soupape anti-retour qui y est agencée, de manière à provoquer une purge ou vidange du gaz résiduel se trouvant dans le tuyau, qui peut alors être évacué vers l'atmosphère ambiante.

D'une façon générale, le chariot 1 est particulièrement bien adapté à une utilisation en milieu hospitalier, notamment dans le cadre de la mise en œuvre d'un traitement thérapeutique d'un patient adulte, adolescent, enfant ou nouveau-né, souffrant d'une pathologie pulmonaire, comme PPHN, SDRA ou HP en chirurgie cardiaque, avec administration par inhalation de NO gazeux au patient en ayant besoin, de manière à dilater ses vaisseaux pulmonaires et augmenter ainsi l'oxygénation sanguine en améliorant les échanges gazeux pulmonaires.

## Revendications

1. Chariot (1) mobile comprenant :
- une embase (2) comprenant au moins un emplacement de stockage (4) pour loger au moins une bouteille de gaz (200),
- plusieurs roulettes (30) servant à déplacer le chariot (1) sur le sol,
- une colonne principale (3) se projetant vers le haut depuis l'embase (2),
- une colonne secondaire (13) se projetant vers le haut depuis l'embase (2) et est solidarisée à la structure d'ancrage (8),
- un caisson de rangement (5),
- une structure d'ancrage (8) agencée au niveau d'une extrémité supérieure (3a) de la colonne principale (3),
- un mât-support (6) porté par la structure d'ancrage (8) et se projetant vers le haut, ledit mât-support (6) portant des moyens de fixation (9) configurés pour y fixer un appareil de délivrance de gaz (100), et
- au moins une poignée de préhension manuelle (10) permettant à un utilisateur de manipuler le chariot (1),
**caractérisé en ce que** :
- le caisson de rangement (5) est agencé le long de la colonne principale (3), et
- la colonne secondaire (13) et la colonne principale (3) sont agencées espacées l'une de l'autre,
et dans lequel le caisson (5) :
- a une forme aplatie comprenant une largeur (L) et une épaisseur (E) telle que : L ≥ 2.E,
- est fixé à la colonne principale (3), et
- s'étend sensiblement entre l'embase (2) et la structure d'ancrage (8).

2. Chariot selon la revendication 1, **caractérisé en ce que** la poignée de préhension manuelle (10) est fixée à la structure d'ancrage (8) et comprend une structure annulaire (11).

3. Chariot selon la revendication 1, **caractérisé en ce que** le caisson (5) comprend un ou plusieurs compartiments de rangement internes accessibles depuis l'extérieur, via une ou des ouvertures aménagées dans la face avant du caisson (5) et munies de portes.

4. Chariot selon la revendication 1, **caractérisé en ce que** le caisson (5) a une largeur (L) et une épaisseur (E) telle que : L ≥ 3.E, de préférence L ≥ 4.E.

5. Chariot selon la revendication 1, **caractérisé en ce que** la structure d'ancrage (8) comprend un plateau surmontant la colonne principale (3).

6. Chariot selon la revendication 1, **caractérisé en ce que** les moyens de fixation (9) portés par le mât-support (6) comprennent une platine-support perforée (19, 19a) permettant une fixation par vissage de l'appareil de délivrance de gaz (100).

7. Chariot selon la revendication 1, **caractérisé en ce que** l'embase (2) comprend en outre un repose-pied (21) permettant à l'utilisateur de faciliter le départ du chariot (1) lorsqu'il est arrêté sur le sol, en y exerçant une force de poussée avec un pied.

8. Chariot selon l'une des revendications 1 ou 4, **caractérisé en ce que** le caisson de rangement (5) a une forme générale parallélépipédique rectangle.

9. Chariot selon l'une des revendications 1, 4 ou 8, **caractérisé en ce que** le caisson (5) comprend un ou plusieurs compartiments de rangement internes (15a) accessibles depuis l'extérieur, via une ou des ouvertures (16) aménagées dans la face avant (5a) du caisson (5) et munies de portes (15).

10. Chariot selon la revendication 1, **caractérisé en ce que** la colonne secondaire (13) et la colonne principale (3) sont agencées espacées l'une à l'autre d'une distance comprise entre 15 et 25 cm.

11. Chariot selon l'une des revendications 1 ou 2 et 3, **caractérisé en ce que** la structure d'ancrage (8) a une forme annulaire (11) ouverte (11a) venant se solidariser à la poignée de préhension manuelle (10), via un ou des bras de jonction (8a).

12. Chariot selon l'une des revendications 1, 4, 8 ou 9, **caractérisé en ce que** le caisson (5) a une hauteur (H) comprise entre 60 et 110 cm, une largeur (L) comprise entre 15 et 60 cm, et une épaisseur (E) comprise entre 5 et 18 cm.

13. Chariot selon l'une des revendications précédentes, **caractérisé en ce que** qu'il comprend au moins une bouteille de gaz (200 ; 200a, 200b) logée dans ledit au moins un emplacement (4) de l'embase (2), et/ou un appareil de délivrance de gaz (100) fixé aux moyens de fixation (9) du mât-support (6).

14. Chariot selon l'une des revendications précédentes, **caractérisé en ce qu'**il comprend deux bouteilles (200a) contenant un mélange NO/N₂ et une bouteille d'oxygène (200b) agencées sur l'embase (2) de sorte que la colonne secondaire (13) soit logée dans un espacement situé entre lesdites bouteilles (200a ; 200b).

15. Utilisation d'un chariot mobile (1) selon l'une des revendications précédentes, pour transporter une ou plusieurs bouteilles de gaz (200), en particulier un mélange NO/N₂ et/ou de l'oxygène, et un appareil de fourniture de gaz (100).

## Patentansprüche

1. Mobiler Wagen (1), aufweisend:
- ein Untergestell (2), aufweisend mindestens einen Lagerplatz (4) zum Aufnehmen mindestens einer Gasflasche (200),
- mehrere Rollen (30) zum Bewegen des Wagens (1) auf dem Boden,
- eine von dem Untergestell (2) nach oben ragende Hauptsäule (3),
- eine Nebensäule (13), die von dem Untergestell (2) nach oben ragt und fest mit der Verankerungsstruktur (8) verbunden ist,
- einen Aufbewahrungskasten (5),
- eine Verankerungsstruktur (8), die am oberen Ende (3a) der Hauptsäule (3) eingerichtet ist,
- einen von der Verankerungsstruktur (8) getragenen und nach oben ragenden Stützmast (6), wobei der Stützmast (6) Befestigungsmittel (9) trägt, die so konfiguriert sind, dass sie daran eine Gasabgabevorrichtung (100) befestigen können, und
- mindestens einen Handgriff (10), der es einem Benutzer ermöglicht, den Wagen (1) zu handhaben,
**dadurch gekennzeichnet, dass**:
- der Aufbewahrungskasten (5) entlang der Hauptsäule (3) eingerichtet ist und
- die Nebensäule (13) und die Hauptsäule (3) voneinander beabstandet eingerichtet sind,
und wobei der Kasten (5):
- eine abgeflachte Form hat, die eine Breite (L) und eine Dicke (E) aufweist, so dass: L ≥ 2.E,
- an der Hauptsäule (3) befestigt ist, und
- sich im Wesentlichen zwischen dem Untergestell (2) und der Verankerungsstruktur (8) erstreckt.

2. Wagen nach Anspruch 1, **dadurch gekennzeichnet, dass** der Handgriff (10) an der Verankerungsstruktur (8) befestigt ist und eine ringförmige Struktur (11) aufweist.

3. Wagen nach Anspruch 1, **dadurch gekennzeichnet, dass** der Kasten (5) ein oder mehrere innere Aufbewahrungsfächer aufweist, die von außen über eine oder mehrere Öffnungen zugänglich sind, die in der Vorderseite des Kastens (5) angeordnet und mit Türen versehen sind.

4. Wagen nach Anspruch 1, **dadurch gekennzeichnet, dass** der Kasten (5) eine Breite (L) und eine Dicke (E) hat, die so gewählt sind, dass L ≥ 3.E, vorzugsweise L ≥ 4.E.

5. Wagen nach Anspruch 1, **dadurch gekennzeichnet, dass** die Verankerungsstruktur (8) eine Platte aufweist, die die Hauptsäule (3) überragt.

6. Wagen nach Anspruch 1, **dadurch gekennzeichnet, dass** die von dem Stützmast (6) getragenen Befestigungsmittel (9) eine gelochte Stützauflage (19, 19a) aufweisen, die eine Befestigung durch Verschrauben der Gasabgabevorrichtung (100) ermöglicht.

7. Wagen nach Anspruch 1, **dadurch gekennzeichnet, dass** das Untergestell (2) ferner eine Fußablage (21) aufweist, die es dem Benutzer ermöglicht, das Wegfahren des Wagens (1) zu erleichtern, wenn er auf dem Boden steht, indem er mit einem Fuß eine Schubkraft ausübt.

8. Wagen nach einem der Ansprüche 1 oder 4, **dadurch gekennzeichnet, dass** der Aufbewahrungskasten (5) eine allgemeine rechteckige Parallelepipedform hat.

9. Wagen nach einem der Ansprüche 1, 4 oder 8, **dadurch gekennzeichnet, dass** der Kasten (5) ein oder mehrere innere Aufbewahrungsfächer (15a) aufweist, die von außen über eine oder mehrere Öffnungen (16) zugänglich sind, die in der Vorderseite (5a) des Kastens (5) angeordnet und mit Türen (15) versehen sind.

10. Wagen nach Anspruch 1, **dadurch gekennzeichnet, dass** die Nebensäule (13) und die Hauptsäule (3) in einem Abstand von 15 bis 25 cm voneinander eingerichtet sind.

11. Wagen nach einem der Ansprüche 1 oder 2 und 3, **dadurch gekennzeichnet, dass** die Verankerungsstruktur (8) eine ringförmige (11) offene (11a) Form hat, die über einen oder mehrere Verbindungsarme (8a) mit dem Handgriff (10) fest verbunden wird.

12. Wagen nach einem der Ansprüche 1, 4, 8 oder 9, **dadurch gekennzeichnet, dass** der Kasten (5) eine Höhe (H) zwischen 60 und 110 cm, eine Breite (L) zwischen 15 und 60 cm und eine Dicke (E) zwischen 5 und 18 cm hat.

13. Wagen nach einem der vorhergehenden Ansprüche, **dadurch gekennzeichnet, dass** er mindestens eine Gasflasche (200; 200a, 200b), die in dem mindestens einen Platz (4) des Untergestells (2) angeordnet ist, und/oder eine Gasabgabevorrichtung (100), die an den Befestigungsmitteln (9) des Stützmasts (6) befestigt ist, aufweist.

14. Wagen nach einem der vorhergehenden Ansprüche, **dadurch gekennzeichnet, dass** er zwei Flaschen (200a), die ein NO/N₂-Gemisch enthalten, und eine Sauerstoffflasche (200b) aufweist, die so auf dem Untergestell (2) eingerichtet sind, dass die Nebensäule (13) in einem Zwischenraum zwischen den Flaschen (200a; 200b) angeordnet ist.

15. Verwendung eines mobilen Wagens (1) nach einem der vorhergehenden Ansprüche zum Transportieren einer oder mehrerer Gasflaschen (200), insbesondere eines NO/N₂-Gemisches und/oder von Sauerstoff, und einer Gasbereitstellungsvorrichtung (100).

## Claims

1. Mobile cart (1) comprising:
- a base (2) comprising at least one storage location (4) for accommodating at least one gas cylinder (200),
- several castors (30) for moving the cart (1) on the ground,
- a main column (3) extending upwards from the base (2),
- a secondary column (13) extending upwards from the base (2) and rigidly connected to the anchoring structure (8),
- a stowage cabinet (5),
- an anchoring structure (8) arranged at an upper end (3a) of the main column (3),
- a support post (6) carried by the anchoring structure (8) and extending upwards, said support post (6) carrying fixing means (9) which are configured for fixing a gas delivery apparatus (100) thereto, and
- at least one manual gripping handle (10) allowing a user to manipulate the cart (1),
**characterized in that**:
- the stowage cabinet (5) is arranged along the main column (3), and
- the secondary column (13) and the main column (3) are arranged spaced apart from each other,
and in which the cabinet (5):
- has a flattened shape comprising a width (L) and a thickness (E) such that: L ≥ 2.E,
- is attached to the main column (3), and
- extends substantially between the base (2) and the anchoring structure (8).

2. Cart according to Claim 1, **characterized in that** the manual gripping handle (10) is fixed to the anchoring structure (8) and comprises an annular structure (11).

3. Cart according to Claim 1, **characterized in that** the cabinet (5) comprises one or more internal stowage compartments accessible from the outside via one or more openings which are formed in the front face of the cabinet (5) and provided with doors.

4. Cart according to Claim 1, **characterized in that** the cabinet (5) has a width (L) and a thickness (E) such that: L ≥ 3.E, preferably L ≥ 4.E.

5. Cart according to Claim 1, **characterized in that** the anchoring structure (8) comprises a tray on top of the main column (3).

6. Cart according to Claim 1, **characterized in that** the fixing means (9) carried by the support post (6) comprise a perforated support plate (19, 19a) permitting fixing of the gas delivery apparatus (100) by screwing.

7. Cart according to Claim 1, **characterized in that** the base (2) additionally comprises a footrest (21) which makes it easier for the user to set the cart (1) in motion, when it is at a standstill on the ground, by exerting a pushing force on it with one foot.

8. Cart according to either of Claims 1 and 4, **characterized in that** the stowage cabinet (5) has the general shape of a rectangular parallelepiped.

9. Cart according to one of Claims 1, 4 and 8, **characterized in that** the cabinet (5) comprises one or more internal stowage compartments (15a) accessible from the outside via one or more openings (16) which are formed in the front face (5a) of the cabinet (5) and provided with doors (15).

10. Cart according to Claim 1, **characterized in that** the secondary column (13) and the main column (3) are arranged spaced apart from each other by a distance of between 15 and 25 cm.

11. Cart according to one of Claims 1 or 2 and 3, **characterized in that** the anchoring structure (8) has an annular shape (11) which is open (11a) and is rigidly connected to the manual gripping handle (10) via one or more joining arms (8a).

12. Cart according to one of Claims 1, 4, 8 and 9, **characterized in that** the cabinet (5) has a height (H) of between 60 and 110 cm, a width (L) of between 15 and 60 cm, and a thickness (E) of between 5 and 18 cm.

13. Cart according to one of the preceding claims, **characterized in that** it comprises at least one gas cylinder (200; 200a, 200b) accommodated in said at least one location (4) of the base (2), and/or a gas delivery apparatus (100) fixed to the fixing means (9) of the support post (6).

14. Cart according to one of the preceding claims, **characterized in that** it comprises two cylinders (200a) containing a NO/N₂ mixture and one oxygen cylinder (200b), which cylinders are arranged on the base (2) in such a way that the secondary column (13) is accommodated in a space situated between said cylinders (200a; 200b).

15. Use of a mobile cart (1) according to one of the preceding claims, for transporting one or more cylinders (200) of gas, in particular a NO/N₂ mixture and/or oxygen, and a gas delivery apparatus (100).
